# FASCICULE DE BREVET EUROPEEN

(11) **EP 1 711 366 B1**
(45) Date de publication et mention de la délivrance du brevet: **09.05.2007**
(21) Numéro de dépôt: 05717666.1
(22) Date de dépôt: 28.01.2005
(51) Int. Cl.: B60K 31/18

(54) **PROCEDE ET DISPOSITIF POUR OPERER LA REGULATION OU LA LIMITATION DE LA VITESSE D UN VEHICULE**
VERFAHREN UND VORRICHTUNG ZUM REGULIEREN ODER BESCHRÄNKEN DER GESCHWINDIGKEIT EINES FAHRZEUGS
METHOD AND DEVICE FOR REGULATING OR LIMITING THE SPEED OF A VEHICLE

(30) Priorité: 03.02.2004 FR 0400975
(43) Date de publication de la demande: 18.10.2006
(73) Titulaire: Peugeot Citroën Automobiles S.A., 78140 Vélizy Villacoublay (FR)
(72) Inventeur: BAILLEUX, François, F-91400 Val D'Albian (FR)
(74) Mandataire: Fernandez, Francis Lionel
(86) Numéro de dépôt international: PCT/FR2005/050020
(87) Numéro de publication internationale: WO 2005/077700

(56) Documents cités:
- DE-A- 4 123 110
- DE-A- 10 201 160
- DE-A- 10 209 006
- US-A- 5 713 428
- US-A- 5 774 820

## Description

Un dispositif selon le préambule de la revendication 1 est connu du document US-A-5 713 428.

La présente invention concerne un procédé et un dispositif servant à opérer la régulation et la limitation de la vitesse d'un véhicule.

Il est connu de réguler automatiquement la vitesse d'un véhicule tel qu'un véhicule automobile ou d'un camion, à une valeur de consigne de vitesse réglable.

De tels dispositifs sont connus sous la forme de ce qu'on appelle des dispositifs « Tempomat », c'est-à-dire des dispositifs de régulation de vitesse, la fonction « Tempomat » ou de régulation de la vitesse consistant à maintenir automatiquement une vitesse réelle du véhicule, atteinte à un instant donné, au moyen d'une régulation de la vitesse. A cet effet, lorsque la vitesse désirée est atteinte, le conducteur actionne le levier de commande du système de régulation de la vitesse et active ainsi la régulation effective de la vitesse en fixant la valeur de vitesse instantanée en tant que valeur de consigne. Il est également possible de fixer librement la vitesse de consigne indépendamment de la vitesse de roulage notamment à partir de boutons de réglage « + » et « - » présents sur le levier de commande et qui permettent d'augmenter ou de réduire la vitesse de consigne.

Il est également connu de limiter la vitesse d'un tel véhicule de sorte que tout dépassement d'une vitesse de consigne soit interdit. Une telle prestation a notamment pour fonction de faciliter le respect du code de la route prescrivant des vitesses limites de circulation. Les dispositifs limiteurs de vitesse n'ont aucune action tant que la vitesse du véhicule demeure inférieure à la vitesse de consigne, ils agissent uniquement lorsque la vitesse du véhicule tend à dépasser la vitesse de consigne. Cette action consiste, soit à modifier le point de fonctionnement du moteur ou à activer des vannes disposées sur le circuit d'admission ou d'échappement du moteur, soit encore à commander les freins du véhicule si l'action sur le moteur s'avère insuffisante.

Traditionnellement les deux fonctions régulation et limitation de la vitesse sont opérées par des modules distincts, commandés distinctement et opérant distinctement leur action sur le véhicule.

L'objet de la présente invention est de proposer un procédé et un dispositif de mise en oeuvre qui permette d'associer les fonctions de régulation et de limitation.

La présente invention concerne donc un procédé pour régler la vitesse d'un véhicule utilisant des moyens pour opérer la régulation de vitesse du véhicule à une valeur de vitesse de consigne de régulation réglable et des moyens pour opérer une limitation de la vitesse du véhicule à une vitesse de consigne de limitation réglable.

Selon l'invention le procédé est caractérisé en ce qu'il est nécessaire d'actionner d'abord lesdits moyens de régulation avant de pouvoir actionner lesdits moyens de limitation.

Selon une autre caractéristique du procédé objet de l'invention, la suspension de la fonction régulation de vitesse véhicule par des moyens appropriés déclenche l'activation de la fonction de limitation de la vitesse véhicule.

Selon une autre caractéristique du procédé objet de l'invention, la reprise de la fonction régulation de la vitesse véhicule par des moyens appropriés déclenche la désactivation de la fonction limitation de la vitesse véhicule.

Selon une autre caractéristique du procédé objet de l'invention, lors de l'activation des moyens de limitation, la vitesse de consigne de limitation est égale à la vitesse de consigne de régulation utilisée par les moyens de régulation.

Selon une autre caractéristique du procédé objet de l'invention, l'activation des moyens de régulation et d'activation est commandée par un unique organe d'activation comprenant une première position d'activation desdits moyens de régulation et de limitation et une seconde position d'arrêt desdits moyens de régulation et de limitation, dans sa première position cet organe d'activation opérant l'activation des moyens de régulation.

La présente invention concerne également un dispositif pour la mise en oeuvre du procédé précité.

Le dispositif pour régler la vitesse d'un véhicule selon l'invention comporte des moyens pour opérer la régulation de vitesse du véhicule à une valeur de vitesse de consigne de régulation réglable, des moyens pour opérer une limitation de la vitesse du véhicule à une vitesse de consigne de limitation réglable et des moyens d'activation comprenant une première position d'activation desdits moyens de régulation et de limitation et une seconde position d'arrêt desdits moyens de régulation et de limitation. Le dispositif comporte des moyens de commutation pour sélectivement activer les moyens de régulation et de limitation

Selon l'invention, le dispositif est caractérisé en ce que les moyens de régulation de la vitesse véhicule coopèrent avec des moyens de débrayage permettant la suspension de la régulation et/ou la reprise de la régulation après sa suspension et en ce que lesdits moyens de commutation coopèrent avec ces moyens de débrayage.

Selon une autre caractéristique du dispositif objet de l'invention, les moyens de débrayage activent sélectivement les moyens de régulation et de limitation.

Selon une autre caractéristique du dispositif objet de l'invention, dans leur première position d'activation, les moyens d'activation opèrent l'activation des moyens de régulation.

Selon une autre caractéristique du dispositif objet de l'invention, les moyens de régulation et les moyens de limitation utilisent la même vitesse de consigne réglable.

Selon une autre caractéristique du dispositif objet de l'invention, il comporte un levier d'actionnement unique commandant le fonctionnement des moyens de régulation et des moyens de limitation.

Selon une autre caractéristique du dispositif objet de l'invention, il comporte des moyens indicateurs de l'état d'activation des moyens limiteurs et des moyens régulateurs, ces moyens comportant un pictogramme présentant un élément symbolisant un cadran de vitesse et des éléments symbolisant des secteurs angulaires entourant ledit cadran, ces éléments étant susceptibles d'être sélectivement éclairés d'une lumière spécifique selon l'état d'activation des moyens limiteurs et des moyens régulateurs.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue schématique partielle d'un levier de commande pour dispositif limiteur et régulateur selon l'invention ;
- la figure 2 représente différents états d'un pictogramme pour afficheur pour dispositif limiteur et régulateur selon l'invention ;

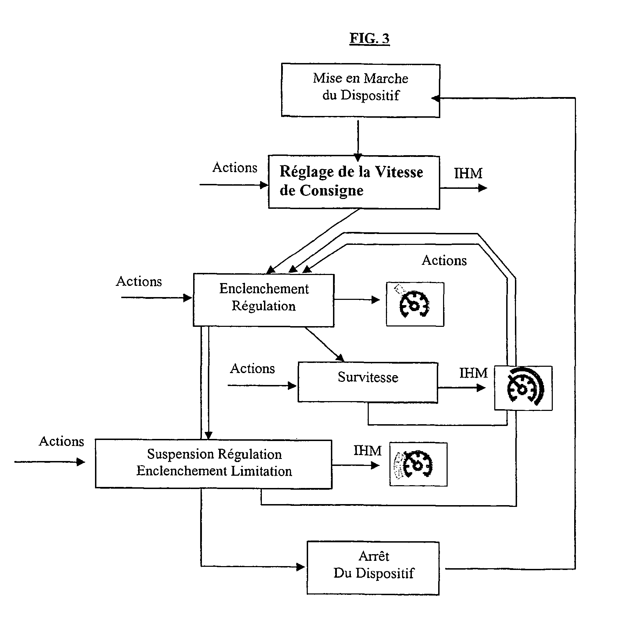

- la figure 3 est un bloc diagramme détaillant la logique de fonctionnement du dispositif selon l'invention.

Le dispositif illustré concerne un dispositif unique assurant les fonctions de limitation et de régulation d'un véhicule automobile.

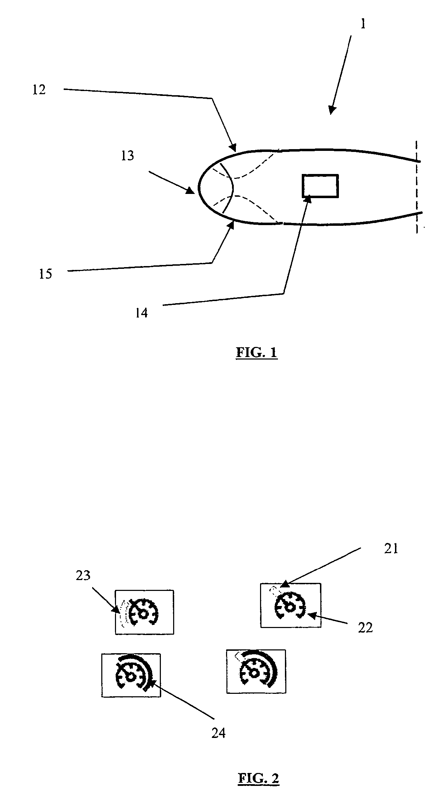

En se reportant à la figure 1, on voit que le dispositif comporte un levier de manoeuvre 1 du type commande sous volant et destiné à être utilisé par le conducteur. Ce levier 1 comporte essentiellement 4 boutons. L'interrupteur 14 du type marche/arrêt sert à activer ou désactiver la fonction de régulation de la vitesse du véhicule. Le bouton 12 permet d'augmenter d'un incrément prédéterminé la vitesse de consigne du dispositif, par exemple de 5 km/h ou de 10 km/h. Le bouton 15 permet de réduire d'un incrément prédéterminé la vitesse de consigne du dispositif, par exemple de 5 km/h ou de 10 km/h. Quant au bouton 13, sa pression permet, soit l'arrêt momentané si la régulation est active, soit la reprise de la régulation si cette dernière a été désactivée (soit au moyen du bouton 13, soit suite à une action du conducteur sur la pédale de frein ou encore sur l'embrayage dans le cas d'une transmission à boîte mécanique, etc.).

Le levier 1 est associé à un écran d'affichage IHM, non figuré disposé sur le tableau de bord du véhicule permettant d'informer le conducteur des informations saisies au moyen du levier 1. Cet IHM peut être partagé avec celui destiné à afficher les données de l'ordinateur de bord équipant le véhicule.

Les informations ayant trait au dispositif régulateur/limiteur sont principalement :état actif ou inactif du dispositif (facultatif), valeur de la vitesse de consigne, mode « régulation » ou « limitation ».

De façon classique, le levier 1 est connecté à au moins un calculateur pour opérer la régulation ou la limitation de la vitesse véhicule par action sur le couple moteur, sur la transmission ou encore sur le système de freinage en fonction des valeurs saisies par l'utilisateur grâce au levier 1.

Par exemple, le calculateur utilisé par le dispositif régulateur/limiteur selon l'invention est le calculateur d'injection qui échange des informations avec le calculateur d'ABS, le calculateur de boîte de vitesse et celui pilotant le tableau de bord. Ce calculateur d'injection applique les valeurs de consigne notamment en agissant directement sur le boîtier papillon ou encore sur la quantité de carburant injecté. Le calculateur d'ABS fournit au calculateur d'injection l'information « vitesse véhicule » et l'information « pédale de frein enfoncée ». Le calculateur d'injecteur dispose directement de l'information « pédale d'accélérateur enfoncée ». Le calculateur de boite de vitesse envoie l'information « rapport engagé » quant au calculateur du tableau de bord, il affiche la valeur de consigne et allume les voyants correspondants.

La figure 2 présente différents états d'un même pictogramme permettant de visualiser facilement sur le tableau de bord le fonctionnement du dispositif régulateur/limiteur. Le pictogramme se compose de 4 éléments dans l'exemple figuré.

Un premier élément est formé par la représentation d'un cadran 22 symbolisant un compteur de vitesse ou tachymètre sous la forme d'un cercle gradué et d'une aiguille.

Les trois autres éléments se composent de secteurs angulaires de dimensions plus ou moins importantes venant entourer le compteur 22. Un deuxième élément 21 sous la forme d'un indexe vient se positionner à l'extérieur du cadran 22 dans le prolongement de l'aiguille. Lorsque cet élément 21 est activé par exemple sous la forme d'une lumière verte, il signifie que le dispositif se trouve en mode régulation. Un troisième élément 23 sous la forme d'un secteur angulaire entourant le cadran 22 entre la vitesse nulle et l'indexe 21, vient se positionner sous l'élément 21. Lorsque cet élément 23 est activé par exemple sous la forme d'une lumière verte, il signifie que le dispositif se trouve en mode limitation. Un quatrième élément 24 sous la forme d'un secteur angulaire entourant le cadrant 22, entre l'indexe 21 et la vitesse maximale, vient se positionner au-dessus l'élément 21. Lorsque cet élément 23 est activé (en addition des éléments 23 ou 21) par exemple sous la forme d'une lumière rouge, il signifie que le véhicule se trouve en survitesse par rapport à la vitesse de consigne.

Le principe de fonctionnement du dispositif selon l'invention va maintenant être explicité.

L'utilisateur souhaitant agir sur la vitesse de son véhicule manoeuvre l'interrupteur 14 pour activer le dispositif. Lors de l'activation, une vitesse de consigne peut être affectée, cette valeur pouvant être une valeur prédéterminée, la valeur de consigne choisie précédemment ou encore la valeur réelle du véhicule à l'instant d'activation du bouton 14.

Au moyen des commandes 12 et 15, le conducteur ajuste la vitesse de consigne à la valeur souhaitée. La vitesse de consigne choisie s'affiche alors sur l'IHM, par exemple 130km/h.

Le conducteur enclenche ensuite le mode « régulation » de la vitesse du véhicule à la vitesse de consigne en appuyant sur le bouton 13.

Le mode « régulation » permet au conducteur de maintenir le véhicule à la vitesse de consigne sans aucune action sur la pédale d'accélérateur. La fonction est annulée par une action sur une des commandes suivantes : pédale de frein, pédale d'embrayage, bouton d'interruption 13 du régulateur ou encore bouton d'arrêt 14, dans ce dernier cas il s'agit d'une annulation définitive alors que dans les autres cas il s'agit uniquement d'une annulation temporaire.

En variante de réalisation, la vitesse de consigne peut être néanmoins dépassée à tout moment par le conducteur en appuyant sur la pédale d'accélérateur. Après relâche de la pédale d'accélérateur le système se remet alors en régulation à la vitesse de consigne.

Lors d'une annulation temporaire de la régulation résultant d'une action sur le bouton 13 ou sur les commandes du véhicule (pédale de frein, d'embrayage, etc.) pour réduire l'allure du véhicule, le mode « régulation » n'est pas arrêté, il est seulement suspendu. La régulation peut alors être immédiatement remise en route en appuyant sur le bouton 13, la valeur de consigne étant alors la dernière mémorisée. Conformément à l'invention, lors de l'interruption temporaire du mode « régulation », le dispositif régulateur/limiteur bascule alors automatiquement en mode « limitation » avec comme valeur maximale à ne pas dépasser la dernière vitesse de consigne du mode « régulation » (par exemple 130km/h).

La limitation de vitesse permet au conducteur de ne pas dépasser une vitesse limite. Au-delà de cette vitesse de consigne, la pédale d'accélérateur devient inactive, et la vitesse reste constante.

En variante de réalisation, la vitesse limite sélectionnée peut être néanmoins désactivée à tout moment en dépassant le point dur de la pédale d'accélérateur, manoeuvre qui neutralise alors momentanément le système. Après relâche de la pédale d'accélérateur le système se remet alors en mode limitation avec la vitesse de consigne mémorisée.

En agissant à nouveau sur le bouton 13, le mode « régulation » se substitue à nouveau au mode limitation avec comme valeur de régulation la dernière vitesse de consigne du mode « limitation » (par exemple 130km/h).

En mode « limitation », tout comme en mode « régulation», le conducteur peut, à tout moment, modifier la valeur de la vitesse de consigne en agissant sur les boutons 12 et 13.

A l'arrêt du dispositif au moyen de l'interrupteur 14, la dernière vitesse de consigne peut être mémorisée, pour être utilisée comme valeur initiale de consigne lors de la prochaine activation du dispositif 1.

Ainsi le dispositif selon l'invention permet de profiter au maximum de la complémentarité entre les fonctions de régulation et de limitation.

En effet la régulation de vitesse est souvent utilisée sur autoroute quand le flux de véhicule est faible, celui ci permet d'assurer une vitesse régulière sans obliger le conducteur à surveiller en permanence sa vitesse sur son compteur, c'est un gain de sécurité : évite les survitesses et permet au conducteur de concentrer sa vision sur le monde extérieur au véhicule.

La limitation de la vitesse, elle est préférée par exemple sur un boulevard périphérique, là où le flux est important mais où le conducteur ne souhaite pas dépasser une certaine vitesse, la configuration existe aussi le dimanche soir aux abords des grandes agglomérations lors des retours de week-end.

On voit que les deux systèmes ont un point commun : ne pas dépasser une vitesse de consigne, mais qu'ils sont complémentaires en fonction du flux véhicule.

De sorte que le regroupement des deux fonctions en une seule permet une optimisation considérable notamment en terme de coût sans pour autant affecter la prestation conducteur. Une seule vitesse de consigne est rentrée pour les deux fonctions (facilité de réglage) la mise en marche se fera pour les deux fonctions en même temps et la logique de fonctionnement est simple : après un enclenchement en régulation, le véhicule roule à la vitesse de consigne sans action du conducteur, dès une action sur une commande de désactivation du régulateur de vitesse, le système passe automatiquement en limitation à la vitesse de consigne réglée précédemment, puis le retour en régulation se fait par un enclenchement par la commande au volant. Ceci permet au conducteur de ne pas dépasser la vitesse qu il souhaite.

Ainsi avec le levier classique des dispositifs régulateurs il est possible de piloter les deux fonctions !

Bien entendu, la présente invention est susceptible de variantes et modifications autres que celles qui ont été illustrées ci-dessus et qui apparaîtront à l'homme de l'art comme résultant de ce qui vient d'être décrit.

## Revendications

1. Dispositif pour régler la vitesse d'un véhicule comportant des moyens pour opérer la régulation de vitesse du véhicule à une valeur de vitesse de consigne de régulation réglable, des moyens pour opérer une limitation de la vitesse du véhicule à une vitesse de consigne de limitation réglable et des moyens d'activation (14) comprenant une première position d'activation desdits moyens de régulation et de limitation et une seconde position d'arrêt desdits moyens de régulation et de limitation, comportant des moyens de commutation pour sélectivement activer lesdits moyens de régulation et de limitation, **caractérisé en ce que** lesdits moyens de régulation de la vitesse véhicule coopèrent avec des moyens de débrayage (13) permettant la suspension de la régulation et/ou la reprise de la régulation après sa suspension et **en ce que** lesdits moyens de commutation coopèrent avec lesdits moyens de débrayage.

2. Dispositif pour régler la vitesse d'un véhicule selon la revendication 1, **caractérisé en ce que** lesdits moyens de débrayage (13) activent sélectivement lesdits moyens de régulation et de limitation.

3. Dispositif pour régler la vitesse d'un véhicule selon la revendication 1, **caractérisé en ce que** dans leur première position d'activation, lesdits moyens d'activation (14) opèrent l'activation desdits moyens de régulation.

4. Dispositif pour régler la vitesse d'un véhicule selon la revendication 1, **caractérisé en ce que** lesdits moyens de régulation et lesdits moyens de limitation utilisent la même vitesse de consigne réglable.

5. Dispositif pour régler la vitesse d'un véhicule selon la revendication 1, **caractérisé en ce qu'**il comporte un levier d'actionnement unique commandant le fonctionnement desdits moyens de régulation et desdits moyens de limitation.

6. Dispositif pour régler la vitesse d'un véhicule selon la revendication 1, **caractérisé en ce qu'**il comporte des moyens indicateurs de l'état d'activation des moyens limiteurs et des moyens régulateurs, lesdits moyens comportant un pictogramme présentant un élément symbolisant un cadran de vitesse (22), et des éléments (21,23,24) symbolisant des secteurs angulaires entourant ledit cadran (22).

7. Procédé pour régler la vitesse d'un véhicule utilisant des moyens pour opérer la régulation de vitesse du véhicule à une valeur de vitesse de consigne de régulation réglable et des moyens pour opérer une limitation de la vitesse du véhicule à une vitesse de consigne de limitation réglable, **caractérisé en ce qu'**il est nécessaire d'actionner d'abord lesdits moyens de régulation avant de pouvoir actionner lesdits moyens de limitation.

8. Procédé selon la revendication 7, **caractérisé en ce que** la suspension de la fonction régulation de vitesse véhicule par des moyens appropriés (13) déclenche l'activation de la fonction de limitation de la vitesse véhicule.

9. Procédé selon la revendication 8, **caractérisé en ce que** la reprise de la fonction régulation de la vitesse véhicule par des moyens appropriés (13) déclenche la désactivation de la fonction limitation de la vitesse véhicule.

10. Procédé selon la revendication 8, **caractérisé en ce** lors de l'activation des moyens de limitation, la vitesse de consigne de limitation est égale à la vitesse de consigne de régulation utilisée par les moyens de régulation lors de la suspension.

## Claims

1. Device for regulating the speed of a vehicle comprising means for performing the regulation of the speed of the vehicle to an adjustable set value for speed regulation, means for performing a limitation of the speed of the vehicle to an adjustable set speed limit and actuation means (14) comprising a first position for activating said regulation and limitation means and a second position for stopping said regulation and limitation means, comprising switching means for selectively activating said regulation and limitation means, **characterised in that** said vehicle speed regulation means co-operate with disengagement means (13) allowing the suspension of the regulation and/or the resumption of the regulation after its suspension and **in that** said switching means co-operate with said disengagement means.

2. Device for regulating the speed of a vehicle according to Claim 1, **characterised in that** said disengagement means (13) selectively activate said regulation and limitation means.

3. Device for regulating the speed of a vehicle according to Claim 1, **characterised in that**, in their first activation position, said activation means (14) perform the activation of said regulation means.

4. Device for regulating the speed of a vehicle according to Claim 1, **characterised in that** said regulation means and said limitation means use the same adjustable set speed.

5. Device for regulating the speed of a vehicle according to Claim 1, **characterised in that** it comprises a single actuation lever controlling the operation of said regulation means and said limitation means.

6. Device for regulating the speed of a vehicle according to Claim 1, **characterised in that** it comprises indicator means of the state of activation of the limiter means and the regulator means, said means comprising a pictogram showing an element symbolising a speed dial (22), and elements (21, 23, 24) symbolising angular sectors surrounding said dial (22).

7. Method for regulating the speed of a vehicle using means for performing the regulation of the speed of the vehicle to an adjustable set value for speed regulation and means for performing a limitation of the speed of the vehicle to an adjustable set speed limit, **characterised in that** it is first necessary to actuate said regulation means before being able to actuate said limitation means.

8. Method according to Claim 7, **characterised in that** the suspension of the vehicle speed regulation function by suitable means (13) triggers the activation of the vehicle speed limitation function.

9. Method according to Claim 8, **characterised in that** the resumption of the vehicle speed regulation function by suitable means (13) triggers the deactivation of the vehicle speed limitation function.

10. Method according to Claim 8, **characterised in that**, on activation of the limitation means, the set speed limit is equal to the set regulation speed used by the regulation means at the time of suspension.

## Patentansprüche

1. Vorrichtung zum Regeln der Geschwindigkeit eines Fahrzeugs mit Mitteln zum Regeln der Geschwindigkeit des Fahrzeugs auf einen einstellbaren Regelungs-Sollwert, mit Mitteln zum Begrenzen der Geschwindigkeit des Fahrzeugs auf einen einstellbaren Begrenzungs-Sollwert und mit Aktivierungsmitteln (14), die in einer ersten Position die Regelungs- und Begrenzungsmittel aktivieren und in einer zweiten Position die Regelungs- und Begrenzungsmittel abschalten, mit Schaltmitteln zum wahlweisen Aktivieren der Regelungs- und Begrenzungsmittel, **dadurch gekennzeichnet, dass** die Mittel zum Regeln der Geschwindigkeit des Fahrzeugs mit Aufhebungsmitteln (13) zusammenwirken, die das Aussetzen der Regelung und/oder die Wiederaufnahme der Regelung nach dem Aussetzen ermöglichen, und **dadurch gekennzeichnet, dass** die Schaltmittel mit den Aufhebungsmitteln zusammenwirken.

2. Vorrichtung zum Regeln der Geschwindigkeit eines Fahrzeugs nach Anspruch 1, **dadurch gekennzeichnet, dass** die Aufhebungsmittel (13) die Regelungs- und Begrenzungsmittel wahlweise aktivieren.

3. Vorrichtung zum Regeln der Geschwindigkeit eines Fahrzeugs nach Anspruch 1, **dadurch gekennzeichnet, dass** die Aktivierungsmittel (14) in ihrer ersten Aktivierungsposition für die Aktivierung der Regelungsmittel sorgen.

4. Vorrichtung zum Regeln der Geschwindigkeit eines Fahrzeugs nach Anspruch 1, **dadurch gekennzeichnet, dass** die Regelungs- und Begrenzungsmittel die gleiche einstellbare Sollgeschwindigkeit verwenden.

5. Vorrichtung zum Regeln der Geschwindigkeit eines Fahrzeugs nach Anspruch 1, **dadurch gekennzeichnet, dass** sie einen einzigen Betätigungshebel aufweist, der die Funktionsweise der Regelungs- und Begrenzungsmittel steuert.

6. Vorrichtung zum Regeln der Geschwindigkeit eines Fahrzeugs nach Anspruch 1, **dadurch gekennzeichnet, dass** sie Mittel zum Anzeigen des Aktivierungszustands der Begrenzungs- und Regelungsmittel aufweist, wobei die Mittel ein Piktogramm mit einem Element aufweisen, das eine Geschwindigkeitsskala (22) symbolisiert, sowie Elemente (21, 23, 24), die Winkelbereiche um die Skala (22) herum symbolisieren.

7. Verfahren zum Regeln der Geschwindigkeit eines Fahrzeugs, das Mittel zum Regeln der Geschwindigkeit des Fahrzeugs auf einen einstellbaren Regelungs-Sollwert und Mittel zum Begrenzen der Geschwindigkeit des Fahrzeugs auf einen einstellbaren Begrenzungs-Sollwert einsetzt, **dadurch gekennzeichnet, dass** zunächst die Regelungsmittel betätigt werden müssen, bevor die Begrenzungsmittel betätigt werden können.

8. Verfahren nach Anspruch 7, **dadurch gekennzeichnet, dass** das Aussetzen der Funktion der Regelung der Geschwindigkeit des Fahrzeugs durch geeignete Mittel (13) die Aktivierung der Funktion der Begrenzung der Geschwindigkeit des Fahrzeugs auslöst.

9. Verfahren nach Anspruch 8, **dadurch gekennzeichnet, dass** die Wiederaufnahme der Funktion der Regelung der Geschwindigkeit des Fahrzeugs durch geeignete Mittel (13) die Deaktivierung der Funktion der Begrenzung der Geschwindigkeit des Fahrzeugs auslöst.

10. Verfahren nach Anspruch 8, **dadurch gekennzeichnet, dass** bei der Aktivierung der Begrenzungsmittel der Begrenzungs-Sollwert dem Regelungs-Sollwert entspricht, der von den Regelungsmitteln vor dem Aussetzen verwendet wurde.
